(19)

Europäisches Patentamt
European Patent Office
Office européen des brevets

(11) **EP 4 579 290 A1**

(12) **EUROPEAN PATENT APPLICATION**
published in accordance with Art. 153(4) EPC

(43) Date of publication:
**02.07.2025 Bulletin 2025/27**

(21) Application number: **23857056.8**

(22) Date of filing: **21.07.2023**

(51) International Patent Classification (IPC):
***G02B 5/30*** (2006.01)

(52) Cooperative Patent Classification (CPC):
**G02B 5/30**

(86) International application number:
**PCT/JP2023/026756**

(87) International publication number:
**WO 2024/042940 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.08.2022 JP 2022135198**

(71) Applicants:
• **National Institute of Advanced Industrial
Science and Technology**
**Chiyoda-ku**
**Tokyo 100-8921 (JP)**
• **Sumitomo Bakelite Co.Ltd.**
**Shinagawa-ku**
**Tokyo 140-0002 (JP)**

(72) Inventors:
• **HOKARI, Ryohei**
**Tsukuba-shi, Ibaraki 305-8560 (JP)**
• **KURIHARA, Kazuma**
**Tsukuba-shi, Ibaraki 305-8560 (JP)**
• **TAKAKUWA, Kyohei**
**Tokyo 101-0054 (JP)**
• **KINO, Keisuke**
**Tokyo 101-0054 (JP)**
• **HIRAMOTO, Kazuhiro**
**Tokyo 101-0054 (JP)**
• **INABA, Hironari**
**Tokyo 140-0002 (JP)**
• **SHIOMOTO, kengo**
**Tokyo 140-0002 (JP)**
• **SATO, Tatsushi**
**Tokyo 140-0002 (JP)**

(74) Representative: **Nederlandsch Octrooibureau**
**P.O. Box 29720**
**2502 LS The Hague (NL)**

(54) **WIRE GRID POLARIZING ELEMENT AND METHOD FOR PRODUCING SAME**

(57)     Provided are a wire grid polarizing element having a high polarization degree and a necessary light transmittance and a method for producing the same. A wire grid polarizing element 11 includes: a substrate 21 where a plurality of concave groove portions 24 extending in parallel are periodically provided in one direction on a transparent sheet surface 22; and a conductor layer 31 that is formed in the concave groove portion, in which in a shape of the plurality of concave groove portions provided on the substrate, side wall surfaces 26 facing each other are parallel to each other, and the conductor layer formed in the concave groove portion is formed with a substantially uniform thickness on at least both of the side wall surfaces 26 of the concave groove portion in a state where the conductor layers of the side wall surfaces face each other through a gap 28.

Fig. 1

**EP 4 579 290 A1**

## Description

## Technical Field

The present invention relates to a wire grid polarizing element that is prepared mainly using plating means and can be expected to be applied to optical products such as a display, a camera, sunglasses, or an optical measuring instrument using an electromagnetic wave such as visible light or near infrared light, and a method for producing the same.

## Background Art

The wire grid polarizing element includes a layer where wire-shaped objects made of metal or the like are arranged in a striped pattern at a specific period and uses the following phenomenon: when the period is sufficiently smaller than a wavelength of an incident electromagnetic wave (light), light of an electric field component parallel to the wire-shaped objects is reflected or absorbed, and transmission of light of an electric field component perpendicular to the wire-shaped objects is allowed. This polarizing element is advantageous in that it has excellent optical characteristics capable of exhibiting a polarization function for visible light to near infrared light and high durability.

As a method for inexpensively and efficiently forming an uneven shape on a substrate surface, a hot embossing method or a nanoimprinting method is known, and a method for depositing a conductor using an oblique deposition method on a convex portion-side surface of a substrate having an uneven shape on a surface is known.

For example, Patent Literature 1 discloses a wire grid polarizing element having excellent polarization characteristics that is obtained by causing particles to be incident on an uneven structure surface of a grid structure layer on a transparent substrate having a one-dimensional lattice-shaped uneven structure from an oblique direction using a dry process such as sputtering or vacuum deposition to form an Al-Si alloy layer having a Si content of 0.05 to 1.5 wt% on a convex portion of the uneven structure, and a method for producing the same.

Patent Literature 2 discloses a wire grid polarizer where a fine metallic wire is formed on an underlayer with an oblique deposition method using a vacuum deposition method and a method for producing the same, the underlayer being made of a metal oxide layer that is formed on the entire surface of top portions of ridges of a transparent substrate having an uneven structure and side surfaces thereof, and the fine metallic wire being made of a metal layer present in 70% or more of the area of at least the top portions of the ridges and further the side surfaces of the ridges.

In addition, as a method for more inexpensively and efficiently preparing a wire-grid polarizing plate, a method for forming an uneven structure and filling a concave portion with a conductor using an electroless plating method to form a conductor fine wire is known. For example, Patent Literature 3 discloses an optical functional body that is formed by filling a substrate having a fine uneven pattern with particles having a smaller particle size than a width of a concave portion using an electroless plating method. In general, in the wire-grid polarizing plate, the transmittance increases by reducing the width of a conductive wire with respect to the period, and shielding performance of the light of the electric field component parallel to the wire is improved by increasing the thickness of the conductive wire (Non-Patent Literature 1). Accordingly, when the performance of the wire grid polarizing element is determined, it is important to balance the period, the width, and the thickness (aspect ratio) of the conductive wire, and Patent Literature 3 also discloses that the wire grid polarizing element can be inexpensively prepared by using a nanoimprinting method for forming the uneven structure.

## Citation List

## Patent Literatures

Patent Literature 1: Japanese Patent Application Laid-Open No. 2009-204894

Patent Literature 2: Japanese Patent No. 5459210

Patent Literature 3: Japanese Patent No. 6042642

## Non-Patent Literature

Non-Patent Literature 1: Low-reflective wire grid polarizing elements with an absorptive layer formed by glancing angle deposition, Journal of Institute of Image Information and Television Engineers, Vol. 65, No. 10, pp. 1440-1445 (2011)

## Summary of Invention

## Technical Problem

However, an object of the invention disclosed in Patent Literature 1 is to solve the problem that, when pure Al is used as a metal forming a wire grid, pure Al particles formed in the convex portion of the substrate through the dry process cannot be refined such that polarization characteristics cannot be obtained as designed. In the invention disclosed in Patent Literature 1, by using an Al-Si alloy having a Si content of 0.05 to 1.5 wt% as the metal for forming the wire grid, the particles formed in the convex portion are refined to improve the polarization characteristics. Accordingly, the application of this invention is limited to a technology that is applicable when an Al-based metal as a metal for forming a wire grid is formed on a substrate through a dry process.

In the invention disclosed in Patent Literature 2, when the fine metallic wire made of the metal layer is formed on the top portions of the ridges of the substrate and the side surfaces thereof using the deposition method, formation of fine metal particles caused by crystallization of the metal material is suppressed, and the underlayer made of the metal oxide layer is provided to prevent a decrease in the transmittance of incident light of the polarizing element. In addition, to form the metal layer on at least a part of the side surfaces of the ridges using the oblique deposition method, there is a limitation in that the value of the height of the ridge cannot increase. For example, in all of Examples 1 to 11 corresponding to Examples in the specification of Patent Literature 2, the height of the ridges is 100 nm. Accordingly, there is a limitation in the uneven structure formed on the substrate. In addition, when the metal layer is formed on the side surface portions of the ridges using the oblique deposition method, the thickness of the metal layer gradually decreases in a direction from the upper portion toward the lower direction of the side surface. Therefore, it is difficult to provide the metal layer with a substantially uniform thickness up to the side surface lower portion.

When the structure where the concave portion of the fine uneven pattern having a high aspect ratio is filled with the metal using the electroless plating method, to prevent the fine particles from peeling or coming off from the substrate surface in the process of forming the metal wire, Patent Literature 3 discloses the optical functional body where the filling layer is formed such that the concave portion is filled with the particles having a smaller particle size than the width of the concave portion using the electroless plating method.

However, in the wire-grid polarizing plate prepared using the electroless plating method described in Patent Literature 3, the polarization degree does not reach about 90%. To increase the polarization degree while maintaining the transmittance of the incident light, it is preferable to increase the aspect ratio of the conductor. Therefore, the aspect ratio (ratio between the thickness and the width) of the substrate concave portion filled with the conductor needs to be increased. In this case, a mold may break or the convex portion of the molded uneven structure may collapse. Therefore, when the substrate having a high aspect ratio is molded, there is a certain degree of limitation. In addition, Patent Literature 3 does not disclose a wire grid polarizing element where a conductor layer is formed with a gap on both of side wall surfaces of the concave portion, and a method for producing the same.

In a method for producing low-reflection wire grid polarizing element using a vacuum deposition technology, for example, "Glancing angle deposition" technology that is a nano-form control of a thin film using a physical deposition method is used for the polarizing element described in Non-Patent Literature 1. However, this technology requires a high-precision film thickness control, and it is not easy to increase the area of the polarizing element. In addition, since this production step is complicated, it is not easy to stably produce this low-reflection wire grid polarizing element.

A wire grid polarizing element having an excellent polarization degree while maintaining a necessary transmittance is required, and a method for reliably producing the above-described wire grid polarizing element through a simple process using various means or the like is also required. Recently, a wire-grid polarizing plate that can be used in a wide wavelength range from visible light to near infrared light or the like is required not only for a liquid projector but also for LiDAR (technology of irradiating an object with laser light to measure the distance to the object, the shape of the object, or the like based on information of the reflected light), a vehicle-mounted camera, an industrial inspection camera, an optical instrument for measurement, polarized sunglasses, or the like, and the ripple effect obtained by realizing this wire-grid polarizing plate is high. The present invention has been made in consideration of the above-described effect, and an object thereof is to provide a wire grid polarizing element that has a high polarization degree while maintaining a necessary light transmittance and can be inexpensively prepared, and a method for producing the same.

## Solution to Problem

In consideration of the above-described technologies in the related art, the present inventors found that a wire grid polarizing element having an excellent polarization degree while maintaining a necessary light transmittance can be obtained by preparing a substrate where a plurality of concave groove portions where side wall surfaces facing each other are formed parallel to each other are periodically arranged in one direction, and disposing a conductor layer on both of the side wall surfaces of the concave groove portion in a state where the conductor layers of the side wall surfaces face each other through a gap such that the concave groove portion is not completely filled with the conductor layer and a ratio (average depth/average thickness) of an average depth (or thickness) in a back surface direction of the concave groove portion to an average thickness (or average width) in a direction perpendicular to the surfaces of the conductor layers formed on the side wall surfaces can increase. Based on this finding, the present invention has been completed.

That is, the present invention is summarized as the following (1) to (7) inventions.

(1) A wire grid polarizing element including:

a substrate where a plurality of concave groove portions extending in parallel are periodically provided in one direction on a transparent sheet surface; and

a conductor layer that is formed in the concave groove portion,

in which in a shape of the plurality of concave groove portions provided on the substrate, side wall surfaces facing each other are parallel to each other, and

the conductor layer formed in the concave groove portion is formed with a substantially uniform thickness on at least both of the side wall surfaces of the concave groove portion in a state where the conductor layers of the side wall surfaces face each other through a gap.

(2) The wire grid polarizing element according to (1), in which a cross-sectional shape along a periodic direction of the concave groove portion that is provided on the substrate and where the side wall surfaces facing each other are parallel to each other is a substantially rectangular shape as a whole where a base is parallel to a substrate surface, a substantially pentagonal shape as a whole where a base portion has an inverted triangular shape, or an U-shape as a whole where a base portion has a substantially U-shape.

(3) The wire grid polarizing element according to (1) or (2),

in which a period (g) in one direction of the concave groove portion provided on the substrate is 50 to 400 nm,

an average width (a) of the concave groove portion is 0.2 to 0.6 times the period (g), and

an average depth (b) of the concave groove portion is 5 to 15 times the average width (a).

(4) The wire grid polarizing element according to any one of (1) to (3), in which an average thickness (c) of the conductor layers formed on both of the side wall surfaces of the concave groove portion of the substrate is 0.15 to 0.30 times an average width (a) of the concave groove portion, and an average gap (f) between the conductor layers formed on both of the side wall surfaces of the concave groove portion is 0.40 to 0.70 times the average width (a) of the concave groove portion.

(5) The wire grid polarizing element according to any one of (1) to (4),

in which an average width (a) of the concave groove portion provided on the substrate is 30 to 130 nm, and

an average thickness (c) of the conductor layers formed on both of the side wall surfaces of the concave groove portion is 5 to 20 nm.

(6) The wire grid polarizing element according to any one of (1) to (5), in which the conductor layer is formed on both of the side wall surfaces of the concave groove portion provided on the substrate and is further formed on a bottom portion and/or on a convex portion surface between the concave groove portions.

(7) A method for producing a wire grid polarizing element, the method including:

molding a substrate where a plurality of concave groove portions extending in parallel are periodically provided in one direction on a surface of a transparent sheet and side wall surfaces facing each other in the concave groove portion are parallel to each other; and

subsequently forming a conductor layer using an electroless plating method with a substantially uniform thickness on at least both of the side wall surfaces of the concave groove portion provided on the substrate in a state where the conductor layers of the side wall surfaces face each other through a gap,

in which etching and a neutralization treatment are performed in this order after surface cleaning as a pretreatment of the substrate when the electroless plating is performed, subsequently catalyst addition and activation are performed using a liquid containing tin ions ($Sn^{2+}$) and a liquid containing palladium ions ($Pd^{2+}$) as a pretreatment of starting an electroless plating reaction, and subsequently the conductor layer is formed by electroless plating with a substantially uniform thickness on both of the side wall surfaces of the concave groove portion in a state where the conductor layers of the side wall surfaces face each other through a gap.

**Advantageous Effect of Invention**

In the wire grid polarizing element according to the present invention, in the substrate where the plurality of concave groove portions extending in parallel are periodically provided in one direction on the transparent sheet surface, each of the two conductor layers formed on both of the side wall surfaces of one concave groove portion through the gap exhibits the polarization function. Accordingly, the two conductor layers are obtained for one concave groove portion in the structure. Therefore, apparently, the conductor having the average period that is 1/2 the average period of the concave groove portion in the structure can be obtained, and the conductor can be formed along the surface of the substrate. As a result, the ratio (depth/thickness) of the average depth (or thickness) from the sheet surface to the back surface side to the average thickness (or width) in the direction perpendicular to the surfaces of the conductor layers formed on the side wall surfaces can increase, and thus a high polarization degree can be realized.

In addition, in the structure where the conductor layer is formed not only the side wall surfaces of the concave groove portion in the uneven structure but also the bottom portion of the concave groove portion, a high polarization degree can be obtained, and a necessary light transmittance can also be obtained.

In the method for producing the wire grid polarizing element according to the present invention, for example, the substrate made of the uneven structure is molded by hot embossing (or nanoimprinting), and subsequently the conductor layer is uniformly formed on the substrate surface of the uneven structure using an electroless plating method. Therefore, the production method according to the present invention is a simple and inexpensive process.

In addition, in the structure where the conductor layer is formed not only the side wall surfaces of the concave groove portion in the uneven structure but also the bottom portion of the concave groove portion and/or the upper surface of the convex portion between the concave groove portions, that is, in the structure where the surface of the specific uneven structure can be covered with the conductor layer with the specific thickness, a necessary light transmittance and a high polarization degree can be obtained. Therefore, the step of removing the conductor in the unnecessary portion after forming the conductor is not necessary. Thus, eco-friendliness can be obtained, device costs or process costs required for the production can be reduced, and the productivity can be improved. In the method for producing the wire grid polarizing element according to the present invention, for example, film insert molding or cast molding can be used for the molding step. Therefore, a three-dimensional curved molded product from which a specific polarization component can be extracted can also be realized.

In the production method according to the present invention, a wire grid polarizing element having excellent environment resistance, bendability, and elasticity can be easily obtained by selecting a material used for the substrate sheet. In addition, the conductor layer can be formed by using a general electroless plating method. Therefore, by using a molding method such as an injection molding method in combination, a molded product including a polarizing element as a part can be realized, and thus market expansion such as the application to an optical member that is difficult to implement in the related art can be expected.

**Brief Description of Drawings**

[Figure 1] Figure 1(1) is a perspective view illustrating an example of a wire grid polarizing element according to the present invention, and Figure 1(2) is a cross-sectional view thereof.

[Figure 2] Each of Figures 2(1), 2(2), and 2(3) is a cross-sectional view illustrating an example of a shape of a concave groove portion provided on a substrate before forming a conductor layer on the wire grid polarizing element according to the present invention.

[Figure 3] Each of Figures 3(1), 3(2), and 3(3) is a cross-sectional view illustrating an example of an aspect where the conductor layer is formed on the substrate in the wire grid polarizing element according to the present invention.

[Figure 4] Figure 4 is a cross-sectional view illustrating an example where an underlayer is provided on the wire grid polarizing element according to the present invention.

[Figure 5] Figure 5(1) is a cross-sectional view illustrating an example where a coating layer including the concave groove portion is provided on the wire grid polarizing element according to the present invention, and Figure 5(2) is a cross-sectional view illustrating an example where a coating layer excluding the concave groove portion is provided on the wire grid polarizing element according to the present invention.

[Figure 6] Figures 6(1) to 6(4) are cross-sectional views schematically illustrating an example of steps of producing the wire grid polarizing element according to the present invention.

[Figure 7] Figure 7 is an image (SEM image) obtained by observing a cross-section of a mold prepared in Example 1 with a scanning electron microscope (SEM).

[Figure 8] Figures 8(1) and 8(2) are SEM images of a cross-section of a polarizing element test piece prepared in Example 1.

[Figure 9] Figures 9(1) to 9(4) are graphs illustrating a relationship between an average width (a) of the concave groove portion and a polarization degree and a single transmittance (luminous transmittance of polarized light in a direction perpendicular to incident light) when the results of numerical calculation of Reference Example 1 are divided depending on average thicknesses (c) of the conductor of 5, 10, 15, and 20 nm.

[Figure 10] Figures 10(1) to 10(4) are graphs illustrating a relationship between the average thickness (c) of the conductor layer and the polarization degree and the single transmittance when the results of numerical calculation of Reference Example 2 are divided depending on average widths (a) of the concave groove portion of 30, 60, 90, and 120 nm.

[Figure 11] Figure 11 is a SEM image obtained by observing a polarizing element test piece prepared in Comparative Example 2 from substantially the front.

**Description of Embodiments**

Regarding the present invention, (1) a wire grid polarizing element and (2) a method for producing a wire grid polarizing element will be described below in detail with reference to the accompanying drawings.

(1) Wire Grid Polarizing Element

Each of elements forming the wire grid polarizing element according to the present invention and a structure thereof will be described.
In the wire grid polarizing element according to the present invention, the shape of a conductor may be a shape other than a so-called "wire shape", for example, a shape where a cross-section is square wave. In the pertinent technical field, even when a conductor does not have a wire shape, the term "wire grid polarizing element" is used, and thus the term wire grid polarizing element is used.
According to the present invention, there is provided a wire grid polarizing element including:

a substrate where a plurality of concave groove portions extending in parallel are periodically provided in one direction on a transparent sheet surface; and

a conductor layer that is formed in the concave groove portion,

in which in a shape of the plurality of concave groove portions provided on the substrate, side wall surfaces facing each other are parallel to each other, and

the conductor layer formed in the concave groove portion is formed with a substantially uniform thickness on at least both of the side wall surfaces of the concave groove portion in a state where the conductor layers of the side wall surfaces face each other through a gap.

[Substrate]

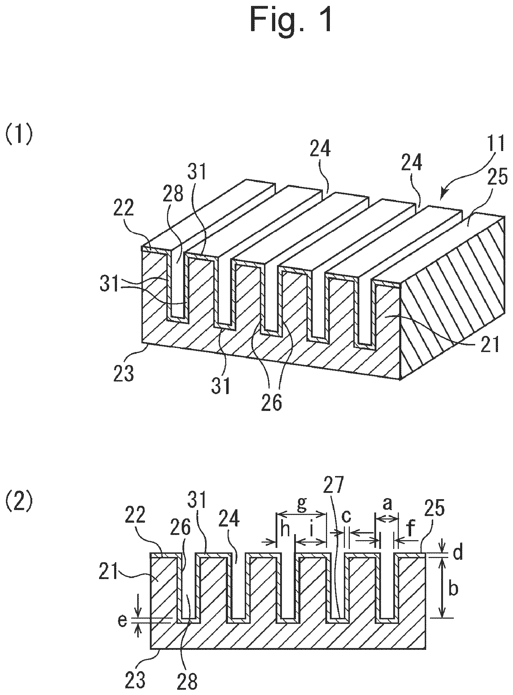

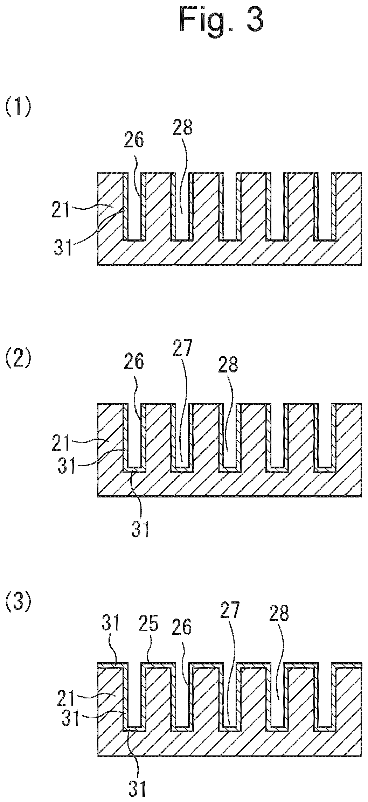

In a substrate 21 in the wire grid polarizing element according to the present invention, as illustrated in Figures. 1 and 3, a plurality of concave groove portions 24 extending in parallel are periodically provided in one direction on a transparent sheet surface 22, and in a shape of the plurality of concave groove portions, side wall surfaces 26 facing each other are parallel to each other. A conductor layer 31 formed in the concave groove portion is disposed on both of side wall surfaces 26 of the concave groove portion 24 is disposed with a substantially uniform thickness in a state where the conductor layers 31 of the side wall surfaces face each other through a gap 28.

Representations illustrated in Figure 1(2) including a period (g), an average width (a), an average depth (b) of the concave groove portions 24 provided in the substrate, an average thickness (c) of the conductor layers 31 formed on both of the side wall surfaces 26 of the concave groove portion 24 in the polarizing element, an average thickness (d) of the conductor layers 31 formed on surfaces of convex portions 25 between the concave groove portions, an average thickness (e) of the conductor layers 31 formed in bottom portions 27, a width (f) of the gap 28 formed between the conductor layers 31 in the concave groove portion 24, an average period (h) of the conductor layers 31 on the side wall surfaces 26 of the concave groove portions 24, and an average period (i) of the conductor layers 31 on the side wall surfaces of the convex portions 25 are commonly used in other embodiments.

The substrate 21 used in the wire grid polarizing element according to the present invention may be a substrate that is transparent with respect to an electromagnetic wave having a target wavelength in a visible range, an infrared range, or the like, and examples thereof include: an amorphous thermoplastic resin such as a polymethyl methacrylate resin, a polycarbonate resin, a polystyrene resin, a cycloolefin polymer resin, a crosslinked polyethylene resin, a polyvinyl chloride resin, a polyarylate resin, a polyphenylene ether resin, a modified polyphenylene ether resin, a polyether imide resin, a polyether sulfone resin, a polysulfone resin, or a polyether ketone resin; a crystalline thermoplastic resin such as a polyethylene terephthalate resin, a polyethylene naphthalate resin, a polyethylene resin, a polypropylene resin, a polybutylene terephthalate resin, an aromatic polyester resin, a polyacetal resin, or a polyamide resin; an ultraviolet curable resin or thermosetting resin such as an acrylic resin, an epoxy resin, or an urethane resin; a triacetate resin; and an inorganic substrate such as glass, silicon, quartz, or a ceramic material. In addition, this substrate is preferably a single-layer structure in an expansion and contraction step such as bending, and may have a multilayer structure.

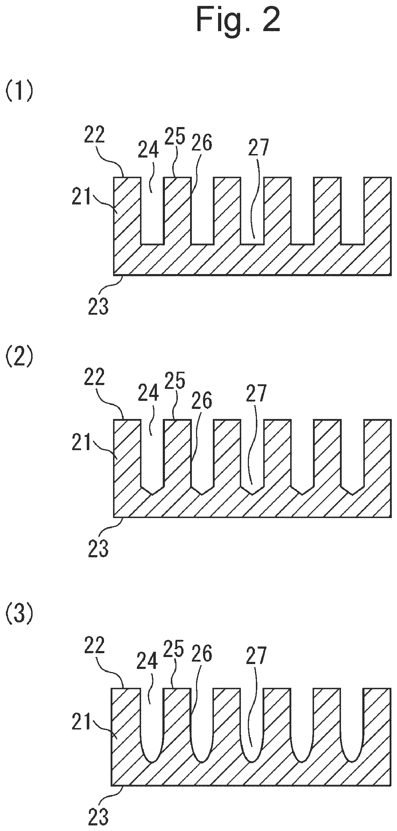

As illustrated in Figures 1(1) and 1(2), the substrate 21 forming the wire grid polarizing element according to the present invention has a front surface 22 side and a back surface 23 side. On the front surface 22 side, the plurality of concave groove portions 24 where the side wall surfaces 26 facing each other are parallel to each other extend in parallel and are periodically formed in one direction. The external shape of the substrate 21 is not particularly limited as long as the period (g), the average width (a), and the average depth (b) of the concave groove portion 24 having a high polarization degree while maintaining a necessary transmittance can be formed. Examples of a cross-sectional shape perpendicular to a periodic direction include a substantially rectangular shape as a whole illustrated in Figure 2(1) where a base is parallel to a substrate surface, a substantially pentagonal shape as a whole illustrated in Figure 2(2) where a base portion has an inverted triangular shape, and an U-shape as a whole illustrated in Figure 2(3) where a base portion has a substantially U-shape. In addition, the convex portion 25 surface does not need to be flat. In the shapes illustrated in Figures 2(1) to 2(3), the convex portion 25 is present between the concave groove portions 24, and the side wall surfaces 26 and the bottom portions 27 are present in the concave groove portion 24.

In the description with reference to Figure 1(2), the period (g) of the concave groove portions 24 of the substrate 21 may be less than or equal to a wavelength of a target electromagnetic wave. That is, in a polarizing element for a visible range, the period (g) is preferably 50 to 400 nm and more preferably 50 to 200 nm. As the average width (a) of the concave groove portion 24 decreases with respect to the period, the transmittance increases. To obtain a necessary transmittance while maintaining a high polarization degree, the average width (a) is preferably in a range of 0.2 to 0.6 times the period, and when the target electromagnetic wave is visible light and light in a near infrared range, the average width (a) is preferably 30 to 130 nm. As the average depth (b) of the concave groove portion 24 increases, the polarization degree tends to increase. Therefore, the average depth (b) is preferably 5 times or more the average width (a), and in consideration of a mechanical strength for preventing fracture, breakage, and the like and moldability using a mold or the like, the average depth (b) is preferably in a range of 5 to 15 times the average width (a). For example, in a visible range, the average depth (b) varies depending on the material of the conductor, and is preferably 400 nm or more. When the cross-sectional shape of the substrate is the shape where the base portion is not parallel to the substrate surface as illustrated in Figures 2(2) and 2(3), the average value of the depths in the cross-sectional shape is the average depth (b).

[Wire Grid Polarizing Element]

The wire grid polarizing element according to the present invention is prepared by forming the conductor layer 31 in the concave groove portion 24 or the like on the front surface 22 side of the substrate 21. The conductor layer 31 needs to be provided on at least both of the side wall surfaces 26 of the concave groove portion 24 through the gap 28 as illustrated in Figure 3(1). Further, the conductor layer 31 can be provided on both of the side wall surfaces 26 and the bottom portion 27 of the concave groove portion 24 as illustrated in Figure 3(2), or can be provided on both of the side wall surfaces 26 and the bottom portion 27 of the concave groove portion 24 and the surface of the convex portion 25 between the concave groove portions 24 as illustrated in Figure 3(3).

The material of the conductor layer 31 used in the present invention may be any material that functions as a conductor in the wavelength range to be used, and examples thereof include aluminum, gold, silver, copper, platinum, molybdenum, nickel, chromium, titanium, tungsten, tantalum, zirconium, iron, niobium, hafnium, and cobalt. In addition to the metals, a semiconductor or an alloy or a compound thereof can also be used.

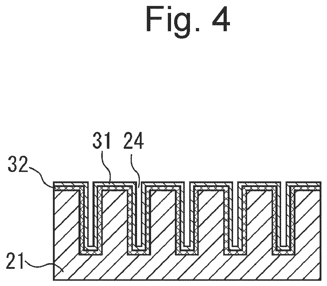

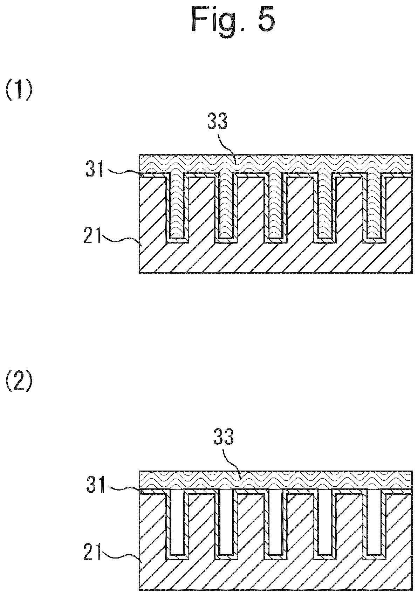

When the conductor layer 31 is formed in the concave groove portion 24 as illustrated in Figure 4, an underlayer 32 made of a dielectric such as silicon oxide, titanium oxide, or hafnium oxide may be formed in advance. In addition, after forming the conductor layer 31 on both of the side wall surfaces 26 of the concave groove portion 24 as illustrated in Figure 5, a coating layer 33 made of a transparent member of an organic material or an inorganic material can be formed. When the coating layer 33 is formed, the gap in the concave groove portion 24 may be embedded with the coating layer 33 as illustrated in Figure 5(1) or may be hollow as illustrated in Figure 5(2).

In the description with reference to Figures 1(2) and 3(1), the average thickness (c) of the conductor layers 31 formed on both of the side wall surfaces 26 in the concave groove portion 24, that is, an average thickness of a portion corresponding to the average width of the conductors of the wire grid polarizing element is preferably 0.15 to 0.30 times of the average width (a) of the concave groove portions 24 formed on the substrate. When the incident light is in a visible range and a near infrared range, the average thickness (c) is preferably 5 to 20 nm.

When the conductor layer 31 is formed in the concave groove portion 24, the conductor layer 31 needs to be formed such that the concave groove portion 24 is not completely filled with the conductor, that is, needs to be formed on both of the side wall surfaces 26 in the concave groove portion 24 through the gap 28. In this case, an average width (f) of the gap 28 is preferably in a range of 0.40 to 0.70 times the average width (a) of the concave groove portion 24 formed on the substrate. The average width (a) of the concave groove portion, the average thickness (c) of the conductor layer of the single side wall surface, and the average width (f) of the gap have a relationship represented by the following formula.

Average Width (a) of Concave Groove Portion = 2 × [Average Thickness (c) of Conductor Layer] + [Average Width (f) of Gap]

By setting the shape of the conductor layer 31 as described above, a ratio (depth/thickness (c)) of the average depth in the back surface direction of the conductor layers 31 formed on both of the side wall surfaces 26 of the concave groove portion 24 in the polarizing element to the average thickness (or the average width) of the conductor layers is more than a ratio (b/a) of the average depth (b) of the concave groove portion 24 to the average width (a) thereof in the substrate. In addition, a period (h) of the conductor layers 31 formed on the side wall surfaces 26 of the concave groove portion 24 can be set to be about 0.5 times the period of the concave groove portions 24, which contributes to a decrease in the target wavelength that can be used in the wire grid polarizing element. As illustrated in Figures 3(1) to 3(3), the average depth in the back surface direction of the conductor layer 31 varies to some extent depending on whether or not the conductor layer 31 is formed on the bottom portion 27 of the concave groove portion 24 and the convex portion 25 between the concave groove portions 24.

In addition, the period (h) of the conductor layers 31 on the side walls of the concave groove portion 24 can be represented by a - c, and a period (i) of the conductor layers 31 on the side walls of the convex portions 25 can be represented by (g - a) + c.

The conductor layer 31 formed in the concave groove portion 24 of the wire grid polarizing element according to the present invention can be further formed on the surface of the convex portion 25 between the concave groove portions 24 and/or on the bottom portion 27 of the concave groove portion 24 as illustrated in Figures 3(2) and 3(3) in addition to the side wall surfaces 26 of the concave groove portion 24.

The average thickness (c) of the conductor layers 31 of the side wall surfaces 26 of the concave groove portion 24 is preferably more on average than the average thickness (d) of the convex portion 25 surface between the concave groove portions 24 or the average thickness (e) of the bottom portion 27. Each of ratios between the average thicknesses (c), (d), and (e) in the direction perpendicular to each of the surfaces of the conductor layer 31 is not particularly limited. That is, the conductor layer 31 having substantially the same average thickness may be uniformly formed on each of the side wall surfaces 26 of the concave groove portion 24 and the convex portion 25, and the bottom portion 27. The average thicknesses (((d) and (e)) of the conductor layers 31 on the convex portion 25 surface between the concave groove portions 24 and the bottom portion 27 may be more than the average thickness (c) of the conductor layers 31 on the side wall surfaces 26 of the concave groove portion 24.

In addition, in a wire grid polarizing element 11 according to the present invention, the conductor layer 31 is formed along the uneven structure of the substrate 21 surface. Therefore, relatively high adhesiveness with the substrate 21 can be obtained. Therefore, due to expansion and contraction caused by a temperature change or the like, the conductor is likely to peel off, heat resistance is excellent, and bending resistance is also excellent. As a result, the present invention is also applicable not only to optical systems for optical products such as various displays or cameras or optical systems for optical measurement but also to polarized sunglasses or smart glasses.

(2) Method for Producing Wire Grid Polarizing Element

According to the present invention, there is provided a method for producing a wire grid polarizing element, the method including:

molding a substrate where a plurality of concave groove portions extending in parallel are periodically provided in one direction on a surface of a transparent sheet and side wall surfaces facing each other in the concave groove portion are parallel to each other; and

subsequently forming a conductor layer using an electroless plating method with a substantially uniform thickness on at least both of the side wall surfaces of the concave groove portion provided on the substrate in a state where the conductor layers of the side wall surfaces face each other through a gap,

in which etching and a neutralization treatment are performed in this order after surface cleaning as a pretreatment of the substrate when the electroless plating is performed, subsequently catalyst addition and activation are performed using a liquid containing tin ions ($Sn^{2+}$) and a liquid containing palladium ions ($Pd^{2+}$) as a pretreatment of starting an electroless plating reaction, and subsequently the conductor layer is formed by electroless plating with a substantially uniform thickness on both of the side wall surfaces of the concave groove portion in a state where the conductor layers of the side wall surfaces face each other through a gap.

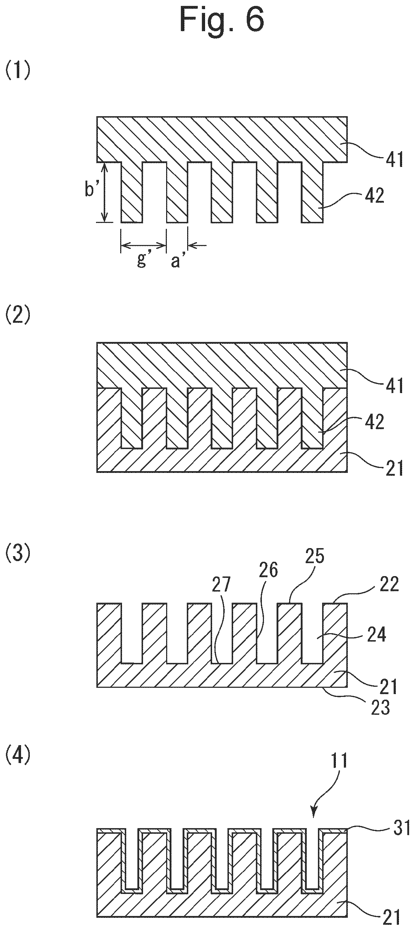

An example of the method for producing the wire grid polarizing element according to the present invention will be described using a schematic cross-sectional view illustrated in Figure 6.

That is, as illustrated in Figure 6, the production method includes, for example, a step (first step: Figure 6(1)) of preparing a mold 41 for providing the concave groove portion 24 on the front surface 22 side of the substrate 21, a step (second step: Figure 6(2)) of performing thermal nanoimprinting (hot embossing) or photo nanoimprinting, a step (third step: Figure 6(3)) of preparing the substrate 21 where the concave groove portion 24 is provided, and a step (fourth step: Figure 6(4)) of forming the conductor layer 31 on each of at least the side wall surfaces 26 of the concave groove portion 24. Note that, essentially, the wire grid polarizing element according to the present invention can be obtained only in the third step and the fourth step, and means for providing the concave groove portion 24 on the substrate 21 prepared in the third step is not particularly limited.

As a method for preparing the mold 41 including a convex portion 42 corresponding to the shape of the concave groove portion 24 in the first step, for example, an exposure technology such as electron beam lithography, a focused ion beam, or interference exposure, a self-organization technology using nanoparticles, or dry etching or wet etching is preferably used, and the mold 41 may be prepared by transfer from a master mold prepared using this technology. The material of the mold 41 is preferably silicon, but may be glass such as quartz, a ceramic such as alumina and silicon carbide, or a metal such as nickel and stainless steel, or may be a multilayer material in which a metal, a semiconductor, or a dielectric is deposited on the above-described material. In addition, to improve mold releasability in nanoimprinting or injection molding, it is preferable that a fluorine-based mold releasing agent is applied to or a low friction inorganic film is formed on the surface of the mold 41. Depending on the mold material to be used and the resin material to be molded, a silicon-based mold releasing agent can also be applied.

In the second step, it is preferable that the transfer is performed by adopting a thermal nanoimprinting (hot embossing) method or a photo nanoimprinting method. A molding method such as injection molding or cast molding can also be used.

When the molding means is adopted, the form of the mold that can be used is not limited to a flat shape and may be a roll shape.

As a method for preparing the substrate 21 where the concave groove portion 24 is provided in the third step, it is preferable that the substrate 21 is prepared in the first step and the second step. The substrate 21 can also be prepared with an exposure technology such as electron beam lithography, a focused ion beam, or interference exposure, a self-organization technology using nanoparticles, an etching technology, or the like. In addition, the substrate 21 is not limited to a single-layer structure and may have a multilayer structure. Layers to be formed on the surface of the concave groove portion may be formed using different materials such as an ultraviolet-curable resin.

In the fourth step, it is preferable that an electroless plating method is used in consideration of mass productivity. When the wire grid polarizing element according to the present invention is produced, not only a physical deposition method such as vacuum deposition or sputtering but also a chemical deposition method or an atomic layer deposition method can also be used, and means including a combination thereof can also be used.

As a specific example when the electroless plating method is used, it is preferable that (i) degreasing and cleaning using a surfactant and an alkaline aqueous solution are performed to remove contamination of the surface, (ii) after etching with an aqueous solution of an inorganic acid such as chromic acid, sulfuric acid, or hydrochloric acid to improve adhesiveness, a neutralization treatment is performed in this order, and (iii) subsequently, the substrate surface is dipped in a liquid containing tin ions ($Sn^{2+}$) and a liquid containing palladium ions ($Pd^{2+}$) as an activation treatment of a chemical plating reaction. Specifically, for example, a sensitizer-activator process in which an operation of dipping the substrate surface to be chemically plated in the liquid containing tin ions ($Sn^{2+}$) and then dipping the substrate surface in the liquid of containing palladium ions ($Pd^{2+}$) is performed once or twice, or a catalyser-accelerator process in which a palladium colloid liquid is prepared by mixing the liquid containing tin ions ($Sn^{2+}$) and the liquid containing palladium ions ($Pd^{2+}$), the substrate surface is dipped in the palladium colloid liquid, and the substrate surface is dipped in a hydrochloric acid solution to accelerate the chemical plating reaction can be used. (iv) Next, it is preferable that the conductor layer is formed using an electroless plating method on both of the side wall surfaces of the concave groove portion in a state where the conductor layers of the side wall surfaces face each other through the gap. Among the above-described treatments, in consideration of the adhesiveness with the wall surface, the activation treatment of adding the palladium catalyst to the wall surface on which electroless plating is to be performed using the liquid containing tin ions ($Sn^{2+}$) and the liquid containing palladium ions ($Pd^{2+}$) is most important.

As the surfaces of the substrate surface where the conductor layer is formed, for example, at least both of the side wall surfaces of the concave groove portion can be used, and the bottom portion of the concave groove portion and convex portion surface between the concave groove portions can be used as optical places. As means for forming the conductor layer at any one of the positions, masking, etching, or the like can be used. In addition, examples of means for controlling the thickness of the conductor layer formed on the substrate surface include a plating treatment time, a plating liquid temperature, a component concentration in the plating liquid, and control of a diffusion layer that is a layer having a concentration gradient in the plating liquid during plating.

In addition, when the conductor layer 31 is formed in the concave groove portion 24 as illustrated in Figure 4, an underlayer 32 made of a dielectric such as silicon oxide, titanium oxide, or hafnium oxide may be formed in advance. To improve environment resistance, after forming the conductor layer 31, the coating layer 33 of an organic material or an inorganic material may be provided on the surface of the conductor layer 31 as illustrated in Figures 5(1) and 5(2). The coating is not limited to a transparent material and may be a transparent material having a tint, for example, a dye containing a pigment or the like. In addition, after forming the conductor layer 31, the shape of the conductor can also be controlled by dry etching with an Ar ion beam or the like.

In the method for producing the wire grid polarizing element according to the present invention, a substrate where concave groove portions where side wall surfaces facing each other are parallel to each other are periodically provided in one direction on a transparent sheet surface is molded, and subsequently a conductor layer is formed with a substantially uniform thickness on at least both of the side wall surfaces of the concave groove portion provided on the substrate in a state where the conductor layers of the side wall surfaces face each other through a gap. As a result, a wire grid polarizing element having the following preferable aspects can be produced.

In a preferable aspect of the concave groove portion shape provided on the substrate, for example, the cross-sectional shape along the periodic direction of the concave groove portion is a substantially rectangular shape, a substantially pentagonal shape where a base has an inverted triangular shape, or an U-shape, the period (g) in one direction of the concave groove portion is 50 to 400 nm, the average width (a) of the concave groove portion is 0.2 to 0.6 times the period (g) or is 30 to 130 nm, and the average depth (b) of the concave groove portion is 5 to 15 times the average width (a).

In a preferable aspect of the conductor layer formed on the substrate surface, for example, the average thickness (c) of the conductor layers formed on both of the side wall surfaces of the concave groove portion of the substrate is 0.15 to 0.30 times the average width (a) of the concave groove portion or is 5 to 20 nm, and the average gap (f) between the conductor layers formed on both of the side wall surfaces of the concave groove portion is 0.40 to 0.70 times the average width (a) of the concave groove portion.

Examples

Next, the present invention will be described in detail using Examples and Comparative Examples below. The present invention is not limited to Examples below.

A polarization degree and a light transmittance of a prepared test piece were measured using the following device.

A spectrophotometer (model: SolidSpec-3700) manufactured by Shimadzu Corporation was used. Incident light of an electric field component vibrating in directions parallel to and perpendicular to the conductor layer (concave groove portion) of the prepared wire grid polarizing element was used. Polarization characteristics were evaluated based on the polarization degree. When a luminous transmittance with respect to polarized light in the direction parallel to the conductor layer (concave groove portion) is represented by Tp and a luminous transmittance with respect to polarized light in the direction perpendicular to the conductor layer (concave groove portion) is represented by Tv, a polarization degree V satisfies $V = [(Tv - Tp)/(Tv + Tp)]^{1/2}$.

The luminous transmittance with respect to each of the polarization components can be obtained from a transmittance (transmittance spectrum) for each of wavelengths 380 to 780 nm (every 1 nm) and a visibility curve. Likewise, when a transmittance with respect to polarized light in the direction parallel to the conductor (concave groove portion) is represented by Tp0 and a transmittance with respect to polarized light in the direction perpendicular to the conductor layer (concave groove portion) is represented by Tv0, a polarization degree V0 at one wavelength is obtained from the following formula.

$$\text{Polarization Degree V0} = [Tv0 - Tp0)/(Tv0 + Tp0]^{1/2}$$

(Example 1)

A substrate having a fine concave groove portion structure was formed on a thermoplastic resin sheet surface with a thermal nanoimprinting method using a mold. Next, a nickel layer was formed by electroless plating on the surface including the concave groove portion such that the concave groove portion was not completely filled with the conductor. As a result, a polarizing element test piece illustrated in Figure 3(3) was prepared.

(1) Preparation of Substrate

As the sheet, a polycarbonate sheet (manufactured by Mitsubishi Gas Chemical Co., Inc., trade name: FE-2000, thickness: 300 $\mu$m) was used. The used mold was obtained by performing microfabrication on a 4-inch silicon wafer.

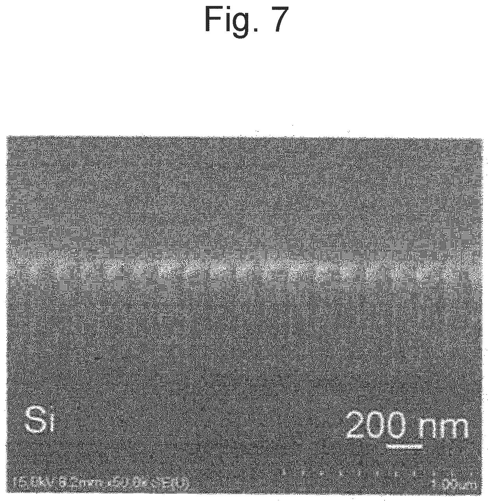

Regarding the fine structure of the used mold, a convex portion shape where a concave groove portion was formed on the substrate surface had an average width (a') of 54 nm and an average length (b') of 586 nm, has a bullet-shaped tip portion that was gradually tapered toward the tip, and had an arrangement period (g') of 140 nm. Using this mold where the mold temperature was adjusted to 175°C, the fine concave structure was transferred to the sheet surface using a thermal nanoimprinting method to prepare a substrate. An image (SEM image) obtained by observing a substantial cross-section of the mold used in Example 1 with a scanning electron microscope (SEM) was illustrated in Figure 7.

(2) Formation of Conductor by Electroless Nickel Plating

Electroless plating was performed on both of side wall surfaces of the fine concave groove portion structure using an electroless nickel-boron plating liquid (trade name: TOP CHEM ALLOY 66-LF) manufactured by Okuno Chemical Industries Co., Ltd. Degreasing and cleaning using a surfactant and an alkaline aqueous solution were performed in advance on the substrate surface to be electroless-plated as a pretreatment. Next, after etching with an aqueous solution of an inorganic acid, a neutralization treatment is performed in this order. Next, a treatment (sensitizer-activator process) of accelerating the chemical plating reaction using a liquid containing tin ions ($Sn^{2+}$) and a liquid containing palladium ions ($Pd^{2+}$) (both of which are manufactured by Okuno Chemical Industries Co., Ltd.) was performed as an activation pretreatment of the chemical plating reaction.

The treatment in the electroless nickel-boron plating liquid was performed at room temperature (23°C) for a predetermined time, and cleaning with water and drying were performed. As a result, a polarizing element test piece where the conductor layer was formed on both of the side wall surfaces of the concave groove portion, the convex portion surface between the concave groove portions, and the bottom portion of the concave groove portion was prepared.

(3) Evaluation Result

Optical characteristics of the results of performing the treatment for plating times of 60 seconds, 90 seconds, 105 seconds, and 120 seconds are illustrated in Table 1.

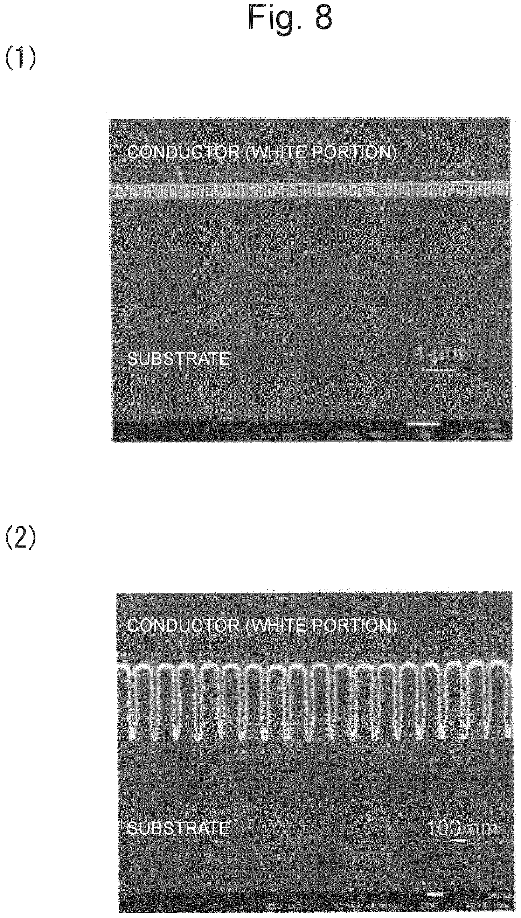

While maintaining, an excellent single transmittance, the polarization degree reached 97.3% after a plating time of 90 seconds, and a polarization degree of 99.8% was obtained after a plating time of 120 seconds. Figure 8(1) is an SEM image obtained by observing a substantial cross-section of the wire grid polarizing element prepared in Example 1 after a plating time of 120 seconds, and Figure 8(2) is an enlarged image of Figure 8(1). In the wire grid polarizing element prepared after a plating time of 120 seconds, the average width of the concave groove portion was 58 nm, the average width of the conductor layers formed on both of the side wall surfaces of the concave groove portion was 17 nm, and the average gap between the conductor layers formed on both of the side wall surfaces of the concave groove portion was 24 nm.

Accordingly, the conductor layers formed on both of the side wall surfaces of the concave groove portion were able to be formed along the substrate surface such that the concave groove portion of the substrate was not completely filled with the conductor, that is, two conductor wires were present in one concave groove portion through a gap. Focusing on the conductor portion formed along the concave groove portion side wall surfaces exhibiting the polarization function, the aspect ratio reached about 20, and it was verified that the structure that is thin when seen from the optical axis direction and includes the thick conductor can be formed, and a high polarization degree can be obtained while maintaining a necessary transmittance.

(Example 2)

In Example 2, as in Example 1, a substrate having a fine concave groove portion structure was formed with a thermal nanoimprinting method using a mold. Next, a nickel layer was formed by electroless plating on the surface including the side wall surfaces of the concave groove portion such that the concave groove portion was not completely filled with the conductor. As a result, a polarizing element test piece was prepared.

(1) Preparation of Polarizing Element Test Piece

The same sheet and the same mold as those used in Example 1 were used. After adjusting the mold temperature to 175°C, the fine concave structure was transferred to the sheet surface using a thermal nanoimprinting method to prepare a substrate.

Next, the same pretreatment step as the step of Example 1 was performed, the same electroless plating liquid as the liquid of Example 1 was used, the plating liquid temperature was set to 16.5°C, 17.8°C, 18.8°C, 20.0°C, and 21.0°C, the plating time was set to 150 seconds, and electroless plating was performed to form a nickel layer on the side wall surfaces of the concave groove portion, the convex portion surface, and the bottom portion, and a polarizing element test piece was prepared.

(2) Evaluation Result

Regarding the obtained polarizing element test piece, a polarization degree and a single transmittance were measured. These results are collectively illustrated in Table 1. Excellent results were obtained for both of the polarization degree and the single transmittance.

(Comparative Example 1)

As in Example 1, a substrate having a fine concave groove portion structure on the surface was prepared with a thermal nanoimprinting method using a mold. Next, nickel was formed by electroless plating on the surface including the concave groove portion. As a result, a polarizing element test piece was prepared.

(1) Preparation of Polarizing Element Test Piece

The same sheet and the same mold as those used in Example 1 were used. The fine concave structure was transferred to the sheet surface using a thermal nanoimprinting method to prepare a substrate.

Next, the same pretreatment step as the step of Example 1 was performed, the same electroless plating liquid as the liquid of Example 1 at room temperature (23°C) was used, and the conductor was formed on the substrate surface by electroless plating for a plating time of 15 minutes. As a result, a polarizing element test piece was prepared.

(2) Evaluation Result

Regarding the obtained polarizing element test piece, a polarization degree and a single transmittance were measured. The concave groove portion of the substrate was completely filled with the conductor, and the thick conductor was also formed on the convex portion surface. Therefore, a single transmittance was 0%, and a necessary transmittance was not obtained. It was found from the above that, when the conductor layer is formed on the substrate surface, the amount of the conductor formed is important, and when the concave groove portion of the substrate is completely filled with the conductor, the amount of the conductor formed on the convex portion surface also increases, and the single transmittance significantly decreases.

(Comparative Example 2)

As in Comparative Example 1, a substrate having a fine concave groove portion structure on the sheet surface was prepared with a thermal nanoimprinting method using a mold. Next, as in Comparative Example 1, a nickel layer was formed by electroless plating on the surface including the concave groove portion. As a result, a test piece was prepared. Next, the obtained test piece was further etched with an argon ion beam from the test piece upper surface. As a result, a polarizing element test piece was prepared.

(1) Preparation of Polarizing Element Test Piece

The same sheet and the same mold as those used in Comparative Example 1 were used. The fine concave structure was transferred to the sheet surface using a thermal nanoimprinting method to prepare a substrate.
Next, by performing the pretreatment step and the electroless plating step as in Comparative Example 1, a polarizing element where the concave groove portion of the substrate surface was filled with nickel was formed. Next, by further performing the argon ion beam etching step, a polarizing element test piece was prepared.

(2) Evaluation Result

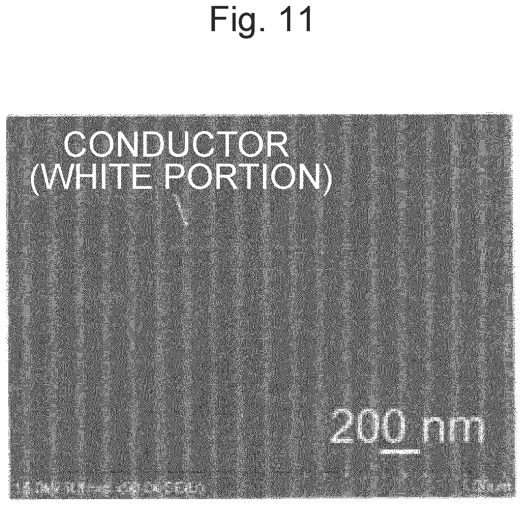

Regarding the obtained polarizing element test piece, a polarization degree and a single transmittance were measured.
The concave groove portion was completely filled with the conductor in the electroless plating step, and the argon ion beam etching was performed on a sample where the thick conductor was formed on the convex portion to remove the nickel layer that was excessively formed. As a result, a polarizing element test piece illustrated in Figure 11 was able to be obtained. Regarding the optical characteristics of the obtained polarizing element test piece, the polarization degree was 99.1%, the single transmittance was 14.3%, and the excellent polarization degree and the excellent single transmittance were obtained.
However, when Example 1 is compared to Comparative Example 2 from the viewpoints of productivity and optical characteristics, the results are as follows. In Example 1, the treatment was completed until the electroless plating step. On the other hand, in Comparative Example 2, after the electroless plating step, the step of removing the nickel layer that was excessively formed by the argon ion beam etching step or the like was further necessary, and the productivity significantly decreased. In addition, when the optical characteristics were compared, in both of the examples, a high polarization degree of 99% or more was achieved while maintaining a necessary transmittance. Therefore, substantially the same effects can be obtained. However, from the viewpoint of productivity, the superiority of the wire grid polarizing element according to the present invention was verified.

[Table 1]

| | | | Example 1 | Example 2 | Comparative Example 1 |
|---|---|---|---|---|---|
| (1) Preparation of Substrate | | | | | |
| Sheet Material | | | Polycarbonate | Polycarbonate | Same in Example 1 |
| Metal concave Portion Average Width | (a') | nm | 54 | 54 | |
| Average Depth | (b') | nm | 586 | 586 | |
| Average Period | (g') | nm | 140 | 140 | |

(continued)

| (2) Preparation of Polarizer | | | | | | | | | | | | | |
|---|---|---|---|---|---|---|---|---|---|---|---|---|---|
| Means for Forming Conductor Layer | | | Electroless Plating | | | | Electroless Plating | | | | | Same in Example 1 |
| Conductor Material | | | Nickel | | | | Nickel | | | | | |
| Plating Time | | Sec | 60 | 90 | 105 | 120 | 150 | | | | | 15 (min) |
| Plating Temperature | | °C | 23 | | | | 16.5 | 17.8 | 18.8 | 20.0 | 21.0 | 23 |
| Average Width of Concave Groove Portion | (a) | nm | 58 | 58 | 58 | 58 | 58 | 58 | 58 | 58 | 58 | - |
| Average Depth of Conductor Layer | (b + d) | nm | 441 | 443 | 447 | 456 | - | - | 446 | - | - | - |
| Average Thickness of Conductor Layer | | | | | | | | | | | | |
| Average Thickness of Side Wall Portions | (c) | nm | 9 | 12 | 15 | 17 | - | - | 15 | - | - | - |
| Average Thickness of Convex Portion Surface | (d) | nm | 11 | 13 | 17 | 26 | - | - | 16 | - | - | - |
| Average Thickness of Bottom Portion | (e) | nm | 9 | 11 | 15 | 17 | - | - | 15 | - | - | - |
| Average Width of Gap | (f) | nm | 40 | 34 | 28 | 24 | - | - | 28 | - | - | - |
| (3) Evaluation Result | | | | | | | | | | | | |
| Polarization Degree | | % | 84.4 | 97.3 | 98.8 | 99.8 | 98.8 | 98.7 | 99.3 | 99.2 | 99.3 | - |
| Single Transmittance | | % | 28.3 | 17.2 | 14.5 | 9.1 | 17.6 | 14.9 | 14.2 | 10.3 | 9.2 | 0 |

(Reference Example 1)

Numerical calculation by rigorous coupled-wave analysis was performed in a geometric model assuming that a polarizing element test piece was prepared as described in Example 1 by forming a substrate having a fine concave groove portion structure on the transparent sheet surface with a thermal nanoimprinting method using the same mold and subsequently forming a nickel layer by electroless plating on the surface including the side wall surfaces of the concave groove portion such that the concave groove portion was not completely filled with the conductor.

(1) Numerical Calculation of Optical Characteristics with respect to Average Width (a) of Concave Groove Portion when Average Thicknesses (c, d, e) of Conductor Layer were Parameters

The numerical calculation was performed based on the geometric model of Figure 1 using DiffractMOD manufactured by Nihon Synopsys G.K. (the former Rsoft). As the substrate polycarbonate was assumed, and the refractive index was defined as 1.58. As the conductor, nickel was assumed, and the value of A. D. Rakic et al., "Optical properties of metallic films for vertical-cavity optoelectronic devices," Appl. Opt. 37, 5271 (1998) was used as the refractive index. Here, assuming that the average thickness (c) of the conductor layers formed on the side wall surfaces in the concave groove portion, the average thickness (d) of the conductor layer of the convex portion surface, and the average thickness (e) of the conductor layer of the bottom portion were the same (c = d = e), a polarization degree and a single transmittance corresponding to the average width (a) of the concave groove portion when the thickness was each of 5, 10, 15, and 20 nm were calculated.

(2) Calculation Results

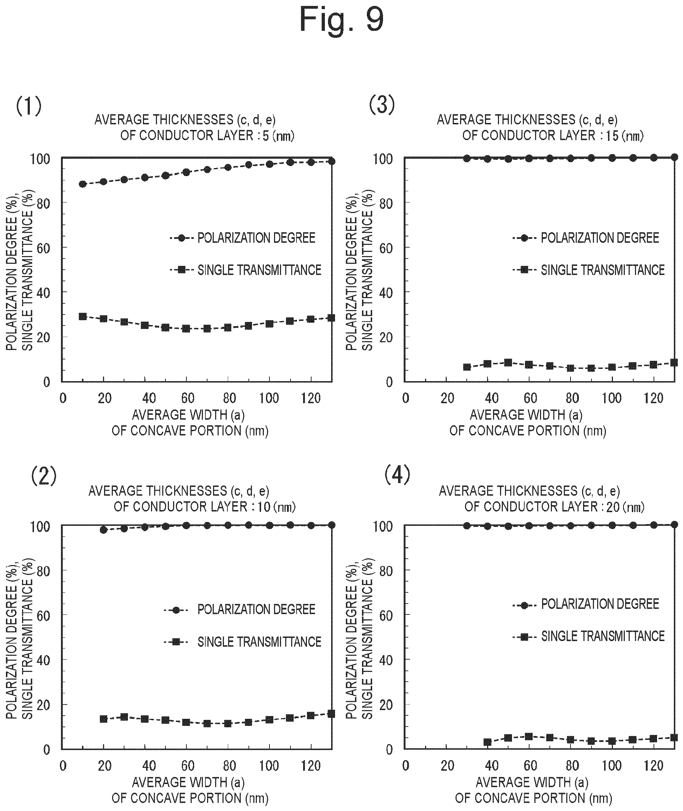

The calculation results are illustrated in Table 2 and Figure 9. In a case where the thickness (c) of the conductor layer was 5 nm, when the average width (a) of the concave groove portion was 30 nm to 130 nm, a polarization degree of 90% or more was obtained, and a single transmittance was also 24% or more. In a case where the thickness (c) of the conductor layer was 10 nm, when the average width (a) of the concave groove portion was 20 nm to 130 nm, a polarization degree of 98% or more was obtained, when the average width (a) of the concave groove portion was 40 nm or more, a polarization degree of 99% or more was obtained, and the single transmittance was also at least 12%. In a case where the average thickness (c) of the conductor layer was 15 nm, when the average width (a) of the concave groove portion was 30 nm to 130 nm, a polarization degree of 99% or more was obtained, and a single transmittance was also at least 6%. In a case where the average thickness (c) of the conductor layer was 20 nm, when the average width (a) of the concave groove portion was 40 nm to 130 nm, a polarization degree of 99% or more was obtained, and a single transmittance fell below 5% and was about 3% to 5%.

(Reference Example 2)

Numerical calculation by rigorous coupled-wave analysis was performed in the same geometric model as the model of Reference Example 1.

(1) Numerical Calculation of Optical Characteristics with respect to Amount of Conductor Formed when Concave Groove Portion Width was Parameter

Numerical calculation was performed based on the geometric model of Figure 1 using the same software as the software of Reference Example 1. As the substrate polycarbonate was assumed, and the refractive index was defined as 1.58. As the conductor layer, nickel was assumed, and the value of A. D. Rakic et al., "Optical properties of metallic films for vertical-cavity optoelectronic devices," Appl. Opt. 37, 5271 (1998) was used as the refractive index.

Here, as in Reference Example 1, it was assumed that the average thickness (c) of the conductor layers formed on the side wall surfaces in the concave groove portion, the average thickness (d) of the conductor layer of the convex portion surface, and the average thickness (e) of the conductor layer of the bottom portion were the same (c = d = e). A polarization degree and a single transmittance corresponding to the thickness (c) of the conductor layer when the average width (a) of the concave groove portion was each of 30 nm, 60 nm, 90 nm, and 120 nm were calculated.

(2) Calculation Results

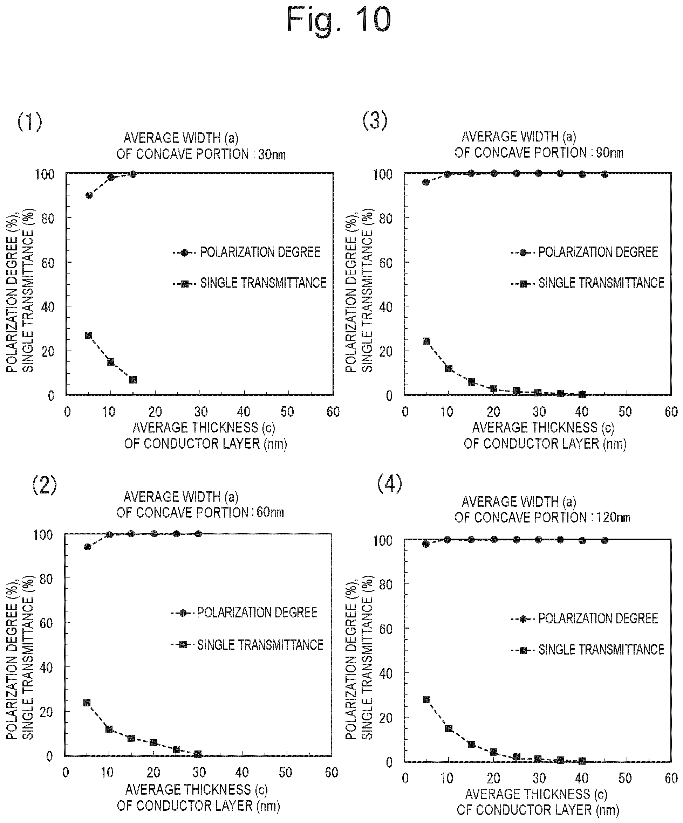

The calculation results are illustrated in Table 2 and Figure 10.

In a case where the average width (a) of the concave groove portion was 30 nm, when the thickness (c) of the conductor layer was 15 nm, a polarization degree of 99% or more and a single transmittance of 6% were obtained.

In a case where the average width (a) of the concave groove portion was 60 nm, when the thickness (c) of the conductor layer was 15 nm, a polarization degree of 99% or more and a single transmittance of 8% were obtained, when the thickness (c) of the conductor layer was 20 nm, a polarization degree of 99% or more and a single transmittance of 5% were obtained, and when the thickness (c) of the conductor layer was 30 nm, a polarization degree of 99% or more and a single transmittance of 1% were obtained.

In a case where the average width (a) of the concave groove portion was 90 nm, when the thickness (c) of the conductor layer was 15 nm, a polarization degree of 99% or more and a single transmittance of 6% were obtained, when the thickness (c) of the conductor layer was 20 nm, a polarization degree of 99% or more and a single transmittance of 3% were obtained, and when the thickness (c) of the conductor layer was 40 nm, a single transmittance was 0%.

In a case where the average width (a) of the concave groove portion was 120 nm, when the thickness (c) of the conductor layer was 15 nm, a polarization degree of 99% or more and a single transmittance of 8% were obtained, when the thickness (c) of the conductor layer was 20 nm, a polarization degree of 99% or more and a single transmittance of 4% were obtained, and when the thickness (c) of the conductor layer was 60 nm, a single transmittance was 0%.

It was verified from the above results that, in the wire grid polarizing element according to the present invention, to obtain a high polarization degree while maintaining a necessary transmittance, it is important to dispose the conductor layer on both of the side wall surfaces of the concave groove portion in a state where the conductor layers of the side wall surfaces face each other through a gap without filling the concave groove portion of the substrate with conductor and to appropriately control the thickness (c) of the conductor layer.

[Table 2]

| | | Reference Example 1 | | | | | Reference Example 2 | | | | | | | | | |
|---|---|---|---|---|---|---|---|---|---|---|---|---|---|---|---|---|
| (1) Preparation of Substrate | | | | | | | | | | | | | | | | |
| Substrate Material | - | Polycarbonate (Refractive Index: 1.58) | | | | | Polycarbonate (Refractive Index: 1.58) | | | | | | | | | |
| (2) Preparation of Polarizer | | | | | | | | | | | | | | | | |
| Means for Forming Conductor Layer | - | Electroless Plating | | | | | Electroless Plating | | | | | | | | | |
| Conductor Material | - | Nickel | | | | | Nickel | | | | | | | | | |
| Average Width (a) of Concave Groove Portion | nm | 30-130 | 20-130 | 40≤ | 30-130 | 40-130 | 30 | 60 | | | 90 | | | 120 | | |
| Average Thicknesses (c), (d), (e) of Conductor Layer | nm | 5 | 10 | | 15 | 20 | 15 | 15 | 20 | 30 | 15 | 20 | 45 | 15 | 20 | 60 |
| Average Width (f) of Gap | nm | a-2c | | | | | a-2c | a-2c | | | a-2c | | | a-2c | | |
| (3) Evaluation Result | | | | | | | | | | | | | | | | |
| Polarization Degree | % | 90 ≤ | 98 ≤ | 99 ≤ | 99 ≤ | 99 ≤ | 99 ≤ | 99 ≤ | 99 ≤ | 99 ≤ | 99 ≤ | 99 ≤ | - | 99 ≤ | 99 ≤ | - |
| Single Transmittance | % | 24 ≤ | 12 ≤ | - | 6 ≤ | 3 to 5 | 6 | 8 | 5 | 1 | 6 | 3 | 0 | 8 | 4 | 0 |

**Industrial Applicability**

The wire grid polarizing element according to the present invention that has a high polarization degree while maintaining a necessary light transmittance can be inexpensively prepared. Therefore, the wire grid polarizing element according to the present invention can be expected to be applied to optical products such as a liquid projector, LiDAR, a vehicle-mounted camera, an industrial inspection camera, an optical instrument for measurement, or polarized sunglasses.

The entire contents of the specification, the claims, the drawings, and the abstract of Japanese Patent Application No. 2022-135198 filed on August 26, 2022 are incorporated herein by reference as the disclosure of the present invention.

**Reference Signs List**

11: wire grid polarizing element

21: substrate

22: front surface

23: back surface

24: concave groove portion

25: convex portion

26: side wall surface

27: bottom portion

28: gap

31: conductor layer

32: underlayer

33: coating layer

41: mold

42: mold convex portion

**Claims**

1. A wire grid polarizing element comprising:

   a substrate where a plurality of concave groove portions extending in parallel are periodically provided in one direction on a transparent sheet surface; and
   a conductor layer that is formed in the concave groove portion,
   wherein in a shape of the plurality of concave groove portions provided on the substrate, side wall surfaces facing each other are parallel to each other, and
   the conductor layer formed in the concave groove portion is formed with a substantially uniform thickness on at least both of the side wall surfaces of the concave groove portion in a state where the conductor layers of the side wall surfaces face each other through a gap.

2. The wire grid polarizing element according to claim 1,

wherein a cross-sectional shape along a periodic direction of the concave groove portion that is provided on the substrate and where the side wall surfaces facing each other are parallel to each other is a substantially rectangular shape as a whole where a base is parallel to a substrate surface, a substantially pentagonal shape as a whole where a base portion has an inverted triangular shape, or an U-shape as a whole where a base portion has a substantially U-shape.

3. The wire grid polarizing element according to claim 1,

wherein a period (g) in one direction of the concave groove portion provided on the substrate is 50 to 400 nm, an average width (a) of the concave groove portion is 0.2 to 0.6 times the period (g), and an average depth (b) of the concave groove portion is 5 to 15 times the average width (a).

4. The wire grid polarizing element according to claim 1, wherein an average thickness (c) of the conductor layers formed on both of the side wall surfaces of the concave groove portion of the substrate is 0.15 to 0.30 times an average width (a) of the concave groove portion, and an average gap (f) between the conductor layers formed on both of the side wall surfaces of the concave groove portion is 0.40 to 0.70 times the average width (a) of the concave groove portion.

5. The wire grid polarizing element according to claim 1,

wherein an average width (a) of the concave groove portion provided on the substrate is 30 to 130 nm, and an average thickness (c) of the conductor layers formed on both of the side wall surfaces of the concave groove portion is 5 to 20 nm.

6. The wire grid polarizing element according to claim 1, wherein the conductor layer is formed on both of the side wall surfaces of the concave groove portion provided on the substrate and is further formed on a bottom portion and/or on a convex portion surface between the concave groove portions.

7. A method for producing a wire grid polarizing element, the method comprising:

molding a substrate where a plurality of concave groove portions extending in parallel are periodically provided in one direction on a surface of a transparent sheet and side wall surfaces facing each other in the concave groove portion are parallel to each other; and
subsequently forming a conductor layer using an electroless plating method with a substantially uniform thickness on at least both of the side wall surfaces of the concave groove portion provided on the substrate in a state where the conductor layers of the side wall surfaces face each other through a gap,
wherein etching and a neutralization treatment are performed in this order after surface cleaning as a pretreatment of the substrate when the electroless plating is performed, subsequently catalyst addition and activation are performed using a liquid containing tin ions ($Sn^{2+}$) and a liquid containing palladium ions ($Pd^{2+}$) as a pretreatment of starting an electroless plating reaction, and subsequently the conductor layer is formed by electroless plating with a substantially uniform thickness on both of the side wall surfaces of the concave groove portion in a state where the conductor layers of the side wall surfaces face each other through a gap.

# Fig. 1

(1)

(2)

# Fig. 2

(1)

(2)

(3)

# Fig. 3

(1)

(2)

(3)

# Fig. 4

# Fig. 5

(1)

(2)

# Fig. 6

(1)

(2)

(3)

(4)

# Fig. 7

# Fig. 8

(1)

(2)

# Fig. 9

(1)

AVERAGE THICKNESSES (c, d, e)
OF CONDUCTOR LAYER : 5 (nm)

- POLARIZATION DEGREE
- SINGLE TRANSMITTANCE

POLARIZATION DEGREE (%),
SINGLE TRANSMITTANCE (%)

AVERAGE WIDTH (a)
OF CONCAVE PORTION (nm)

(3)

AVERAGE THICKNESSES (c, d, e)
OF CONDUCTOR LAYER : 15 (nm)

- POLARIZATION DEGREE
- SINGLE TRANSMITTANCE

POLARIZATION DEGREE (%),
SINGLE TRANSMITTANCE (%)

AVERAGE WIDTH (a)
OF CONCAVE PORTION (nm)

(2)

AVERAGE THICKNESSES (c, d, e)
OF CONDUCTOR LAYER : 10 (nm)

- POLARIZATION DEGREE
- SINGLE TRANSMITTANCE

POLARIZATION DEGREE (%),
SINGLE TRANSMITTANCE (%)

AVERAGE WIDTH (a)
OF CONCAVE PORTION (nm)

(4)

AVERAGE THICKNESSES (c, d, e)
OF CONDUCTOR LAYER : 20 (nm)

- POLARIZATION DEGREE
- SINGLE TRANSMITTANCE

POLARIZATION DEGREE (%),
SINGLE TRANSMITTANCE (%)

AVERAGE WIDTH (a)
OF CONCAVE PORTION (nm)

# Fig. 10

(1)

AVERAGE WIDTH (a)
OF CONCAVE PORTION : 30nm

(3)

AVERAGE WIDTH (a)
OF CONCAVE PORTION : 90nm

(2)

AVERAGE WIDTH (a)
OF CONCAVE PORTION : 60nm

(4)

AVERAGE WIDTH (a)
OF CONCAVE PORTION : 120nm

Fig. 11

CONDUCTOR
(WHITE PORTION)

200 nm

## INTERNATIONAL SEARCH REPORT

| International application No. |
| --- |
| **PCT/JP2023/026756** |

| A. | CLASSIFICATION OF SUBJECT MATTER |
| --- | --- |

*G02B 5/30*(2006.01)i
FI: G02B5/30

According to International Patent Classification (IPC) or to both national classification and IPC

| B. | FIELDS SEARCHED |
| --- | --- |

Minimum documentation searched (classification system followed by classification symbols)

G02B5/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2006/064693 A1 (TORAY INDUSTRIES) 22 June 2006 (2006-06-22) | 1-6 |
| Y | claims 1-4, paragraph [0061], fig. 2, 3(d), 4(a), 4(b) | 7 |
| X | JP 2008-181112 A (TORAY INDUSTRIES) 07 August 2008 (2008-08-07) | 1-6 |
| Y | paragraphs [0022], [0029]-[0050], [0091], [0150]-[0153], fig. 2(a), 2(b), 2(d), 4, 8(h) | 7 |
| X | WO 2009/123290 A1 (ASAHI GLASS CO LTD) 08 October 2009 (2009-10-08) | 1-6 |
| A | claims 1-7, fig. 1 | 7 |
| X | JP 2010-117634 A (SONY CORP) 27 May 2010 (2010-05-27) | 1-6 |
| A | paragraphs [0091]-[0092], fig. 8 | 7 |
| Y | JP 2001-323383 A (OKUNO CHEM IND CO LTD) 22 November 2001 (2001-11-22) paragraphs [0003]-[0008], [0011]-[0016], [0030], [0036]-[0039] | 7 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 August 2023** | **05 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/026756**

| Patent document cited in search report | | | Publication date (day/month/year) | Patent family member(s) | | | Publication date (day/month/year) |
|---|---|---|---|---|---|---|---|
| WO | 2006/064693 | A1 | 22 June 2006 | US | 2008/0129931 | A1 | |
| | | | | claims 1-4, paragraph [0099], fig. 2, 3(d), 4(a), 4(b) | | | |
| | | | | EP | 1840603 | A1 | |
| | | | | CN | 101080656 | A | |
| | | | | KR | 10-2007-0095878 | A | |
| | | | | TW | 200641409 | A | |
| JP | 2008-181112 | A | 07 August 2008 | (Family: none) | | | |
| WO | 2009/123290 | A1 | 08 October 2009 | US | 2011/0080640 | A1 | |
| | | | | claims 1-7, fig. 1 | | | |
| | | | | EP | 2261704 | A1 | |
| | | | | CN | 101981479 | A | |
| | | | | KR | 10-2011-0002008 | A | |
| | | | | TW | 201003154 | A | |
| JP | 2010-117634 | A | 27 May 2010 | (Family: none) | | | |
| JP | 2001-323383 | A | 22 November 2001 | (Family: none) | | | |

Form PCT/ISA/210 (patent family annex) (January 2015)

**REFERENCES CITED IN THE DESCRIPTION**

**Patent documents cited in the description**

- JP 2009204894 A
- JP 5459210 B
- JP 6042642 B
- JP 2022135198 A

**Non-patent literature cited in the description**

- *Journal of Institute of Image Information and Television Engineers*, 2011, vol. 65 (10), 1440-1445
- **RAKIC et al.** Optical properties of metallic films for vertical-cavity optoelectronic devices. *Appl. Opt.*, 1998, vol. 37, 5271
- **A. D. RAKIC et al.** Optical properties of metallic films for vertical-cavity optoelectronic devices. *Appl. Opt.*, 1998, vol. 37, 5271